# Europäisches Patentamt

# European Patent Office

# Office européen des brevets

(19)

(11) Veröffentlichungsnummer: **0 085 979**

**B1**

(12) # EUROPÄISCHE PATENTSCHRIFT

(45) Veröffentlichungstag der Patentschrift:
26.11.86

(21) Anmeldenummer: **83101148.1**

(22) Anmeldetag: **07.02.83**

(51) Int. Cl.⁴: **C 25 D 1/08,** G 01 F 1/68

(54) Verfahren zur Herstellung freitragender Metallgitterstrukturen.

(30) Priorität: **09.02.82 DE 3204425**

(43) Veröffentlichungstag der Anmeldung:
**17.08.83 Patentblatt 83/33**

(45) Bekanntmachung des Hinweises auf die Patenterteilung:
**26.11.86 Patentblatt 86/48**

(84) Benannte Vertragsstaaten:
**AT FR GB**

(56) Entgegenhaltungen:
**DE-B-1 573 098**
**FR-A-2 001 382**
**FR-A-2 304 693**

(73) Patentinhaber: **Siemens Aktiengesellschaft Berlin
und München, Wittelsbacherplatz 2, D-8000
München 2 (DE)**

(72) Erfinder: **Schuster- Woldan, Hans, Dr. rer. nat.,
Dipl.- Chem., Drosselgasse 9, D-8031
Wörthsee/Steinebach (DE)**
Erfinder: **Bürk, Hermann, Ing. grad.,
Pommernstrasse 4, D-8031 Maisach (DE)**
Erfinder: **Koch, Dirk, Ing. grad., Leharstrasse 9a,
D-8900 Augsburg (DE)**
Erfinder: **Weingand, Kaspar, Dr. rer. nat., Dipl.-
Chem., Mooshölzlweg 1, D-8184 Gmund (DE)**

EP 0 085 979 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung freitragender Metallgitterstrukturen und die Verwendung der dabei hergestellten Einzelbausteine als Mikroströmungsfühler für Gasanalysengeräte.

Aus der DE-PS 25 12 086 ist ein Verfahren zur Herstellung freitragender dünner Metallstrukturen, insbesondere von Gittern, bekannt, bei welchen auf einem Träger eine Galvanikabdeckung aufgebracht wird, die Metallstrukturen (Gitter und flächige Metallisierung) durch galvanische Metallabscheidung aufgebaut und in einen tragenden Rahmen aufgenommen werden.

Freitragende, dünne Metallstrukturen werden als Masken in der Elektronenlithografie und der Röntgenschattenkopie oder als Dünnschicht-Aperturblenden für Korpuskularstrahlgeräte eingesetzt. Ein weiteres Anwendungsgebiet ist die Widerstandsmessung in Gasspürgeräten mittels hochfeiner freitragender Metallgitter. Da die Strukturabmessungen dieser Metallstrukturen in der Regel im Mikronbereich liegen, ist ihre Herstellung und Handhabung äußerst schwierig.

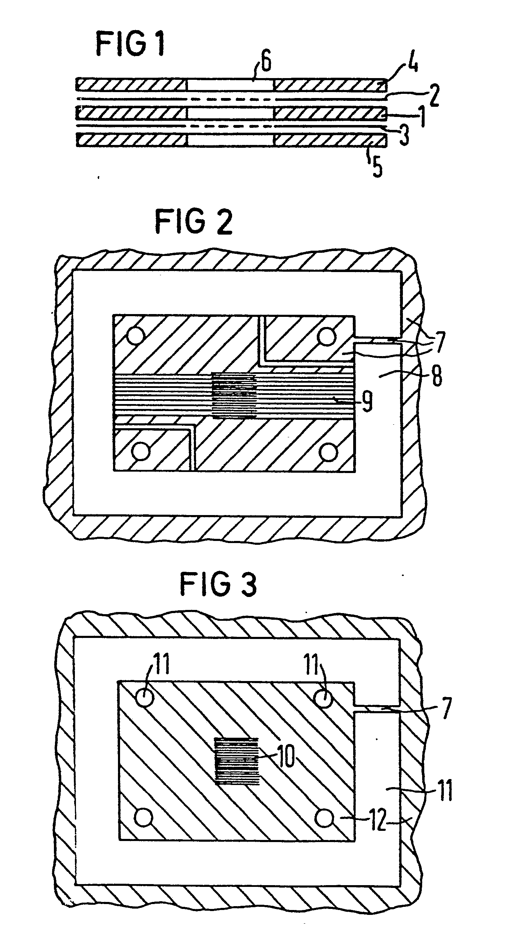

Die bekannten Gitter sind für verschiedene Anwendungszwecke nicht ausreichend. Wie aus der Figur 1 ersichtlich, hat man durch Verlöten von jeweils zwei Nickelgittern zwischen drei glaslotbeschichteten, ultraschallgebohrten Glasplättchen Gitter hergestellt, die höheren Ansprüchen gerecht werden. Dabei ist auf jeder Seite eines Abstandsglases 1 ein Nickelgitter 2, 3 vorgesehen. Durch je ein Deckglas 4, 5 wird der Bustein abgeschlossen. Mit 6 ist eine Öffnung bezeichnet. Die Nickelgitter werden galvanoplastisch auf V2A-Stahlplatten abgeschieden und im Bedarfsfall abgezogen. Bei der Herstellung eines derartigen Gitters sind vor allem die Montage und die dadurch bedingten hohen Ausfälle nach wie vor problematisch.

Der Erfindung liegt die Aufgabe zugrunde, ein Verfahren zur Herstellung solcher Doppelgitter-Strukturen anzugeben, bei dem ein kompliziertes Zusammenfügen mehrerer Einzelteile vermieden wird. Diese Aufgabe wird dadurch gelöst, daß auf einem elektrisch isolierenden Träger beidseitig eine Metallgitterstruktur aufgebracht und anschließend in einem definierten Bereich unter dem Gitter ein partieller Durchbruch in den Träger geätzt wird. Der wesentliche Vorteil der Erfindung liegt darin begründet, daß es damit vermieden wird, derartige Metallgitterstrukturen durch schwieriges Justieren und anschließend durch Verlöten mit Glaslot in einer Art Sandwichbauweise aufzubauen. Das Verfahren nach der Erfindung zeichnet sich somit durch besondere Einfachheit aus.

Nach einer Weiterbildung der Erfindung werden vorzugsweise auf einem Glasträger durch Kombination von jeweils doppelseitiger Vakuumbeschichtung (zur Erzeugung einer elektrisch leitenden Schicht), Fototechnik (zur Erzeugung von Negativgitterstrukturen), Galvanik (zum Aufbau von Gitterstegen und flächiger Metallisierung) und Ätztechnik die Strukturen in gegenseitig definierter Lage erzeugt. Der Vorteil dieses Verfahrens besteht darin, daß Gitter nach der Erfindung bereits justiert sind.

Nach der Erfindung wird der Glasträger ganzflächig und beidseitig zunächst mit Titan und Kupfer und anschließend mit Fotolack beschichtet, einem Fotolacktechnikprozeß unterworfen und zunächst die Negativstrukturen im Fotolack erzeugt. Unter Negativstruktur sind sowohl die Gitterstruktur als auch die flächigen Strukturen zu verstehen. Anschließend werden die Metallstrukturen (Gitter und flächige Metallisierung) galvanoplastisch aufgebracht und der verbleibende Fotolack entfernt. Daraufhin werden die Gesamtflächen wiederum mit Fotolack beschichtet und dann einer zweiten Fototechnik unterworfen. Ferner werden die nicht mit Fotolack und galvanisch aufgebrachten Metallstrukturen beschichteten Flächen aus den Grundmetallisierungsschichten Titan und Kupfer freigeätzt, die gewünschten Durchbrüche im Glas ätztechnisch erzeugt und schließlich der Fotolack völlig entfernt. Anschließend werden die nicht mit galvanischen Metallstrukturen belegten Flächen vom Titan und Kupfer freigeätzt und verbleibende Glasätzreste weggelöst.

Bei der Herstellung mehrerer Einzelbausteine aus einem größeren Substrat werden die Einzelbausteine gleichzeitig mit dem Ätzen der Durchbrüche bis auf einen schmalen Haltesteg freigeätzt. Der wesentliche Vorteil der Erfindung liegt darin begründet, daß mehrere Einzelbausteine (Einheiten) auf einem Substrat erzeugt werden können. Die optische und elektrische Prüfung ist somit weitgehend vereinfacht und mit geringem Aufwand sind viele Ausführungsformen realisierbar. Ferner vereinfacht sich die Montage ganz wesentlich.

Bei bestimmten Gasanalysegeräten werden feine Metallgitter als Strömungsfühler verwendet. Die technische Ausführung erfolgt im Prinzip folgendermaßen: Auf ein Glaslochplättchen wird zu beiden Seiten (Figur 1) je ein feines mäanderförmiges Nickelgitter aufgebracht. Über der Öffnung im Glasplättchen sind damit freitragende Nickelstege gespannt. Die Gitter stellen elektrische Widerstände dar. Durch Anlegen einer elektrischen Spannung werden diese beheizt. Strömt nun ein zu messendes Gas durch die Meßöffnung, so kühlen sich die Gitter unterschiedlich ab und verändern damit ihren elektrischen Widerstand ebenfalls unterschiedlich. Die Differenz der Widerstandsänderung ist ein Maß für die Gasströmung. Sie kann mit Hilfe einer Brückenschaltung indirekt über eine Meßspannung ermittelt werden.

Wie bereits anhand der Figur 1 erläutert, kann ein Meßdetektor aus mehreren Einzelteilen zusammengesetzt werden. Dies weist jedoch mehrere Nachteile auf. Nach der Erfindung kann ein Einzelbaustein mit einer freitragenden Metallgitterstruktur als Mikroströmungsfühler für Gasanalysengeräte Verwendung finden. Der · wesentliche Vorteil liegt darin begründet, daß die Mikroströmungsfühler als kompakte Einheit herstellbar sind, die keiner weiteren Justage bedürfen.

Nach einer Weiterbildung der Erfindung sind in jedem Einzelbaustein zusätzliche Löcher für die Anschlußkontaktierung vorgesehen, in die Kontaktierdrähte eingeführt und angelötet werden. Die erforderliche Metallstruktur ist bereits in der Maske vorgesehen.

Die Erfindung wird anhand der Figuren 2 bis 6 erläutert. Es zeigen:

Figur 1 einen Baustein für ein angewandtes Verfahren,

Figur 2 die Aufsicht auf einen Einzelbaustein nach der galvanoplastischen Abscheidung von Nickel,

Figur 3 den Einzelbaustein nach dem zweiten Fototechnikprozeß,

Figur 4 den Einzelbaustein nach dem Glasätzen und der zweiten Fotolackentschichtung,

Figur 5 die Aufsicht auf einen Nutzen mit 16 Einzelbausteinen und

Figur 6 die Aufsicht auf eine Meßöffnung eines Mikroströmungsfühlers für Gasanalysengeräte.

Freitragende Metallgitterstrukturen, die zum Beispiel als Mikroströmungsfühler Verwendung finden können, sind als Kompaktbaustein durch kombinierte Foto- und Ätztechnik aus beidseitig metallisierten Glasträgern nach folgendem Verfahren herzustellen:

Beidseitiges Bedampfen eines 15D µm dicken Glasträgers zum Beispiel vom Format 5D x 5D mm² mit 50 nm Titan und 200 nm Kupfer. Darauf erfolgt ein Belacken mit ca. 4 µm Positiv-Fotolack im Tauchverfahren und Kontaktbelichtung mit auf Deckungsgleichheit justierten Maskenpaar (zum Beispiel 16 Einzelbausteine). Daran schließt sich eine Fotolackentwicklung und eine galvanoplastische Abscheidung von Sulfamat-Nickel.

Diesen letzten Verfahrensschritt zeigt die Figur 2. In dieser und den folgenden Figuren symbolisiert das Bezugszeichen 7 Nickel, 8 Fotolack und 9 Fotolack- und Nickelstege.

Anschließend ist eine Fotolack-Entschichtung, zum Beispiel mit Aceton, vorgesehen. Darauf folgt ein Belacken mit ca. 5 Vm Fotolack. Daran schließt sich ein Belichten mit auf Deckungsgleichheit justiertem Maskenpaar (Strukturen für Freiätzung) und die Fotolackentwicklung.

Die Figur 3 zeigt einen Einzelbaustein nach diesem letzten Verfahrensschritt. Mit 7 ist wiederum Nickel bezeichnet. Das Bezugszeichen 10 kennzeichnet Nickelstege und Kupfer, 11 Kupfer und 12 Fotolack.

Auf die Fotolackentwicklung erfolgt das Ätzen von Kupfer (Meßöffnung, Löcher für Kontaktierdrähte und Rand) mit Chromsäure. Daran schließt sich das Ätzen von Titan und Glas (Meßöffnung, Löcher für Kontaktierdrähte und Rand) vorzugsweise mit 40 %iger Flußsäure im Tauchverfahren an. Neben der Meßöffnung (partieller Durchbruch) sind noch später erläuterte zusätzliche Durchbrüche 17 zum Anbringen der Kontaktierdrähte vorgesehen. Darauf folgt eine Fotolack-Entschichtung, zum Beispiel mit Aceton.

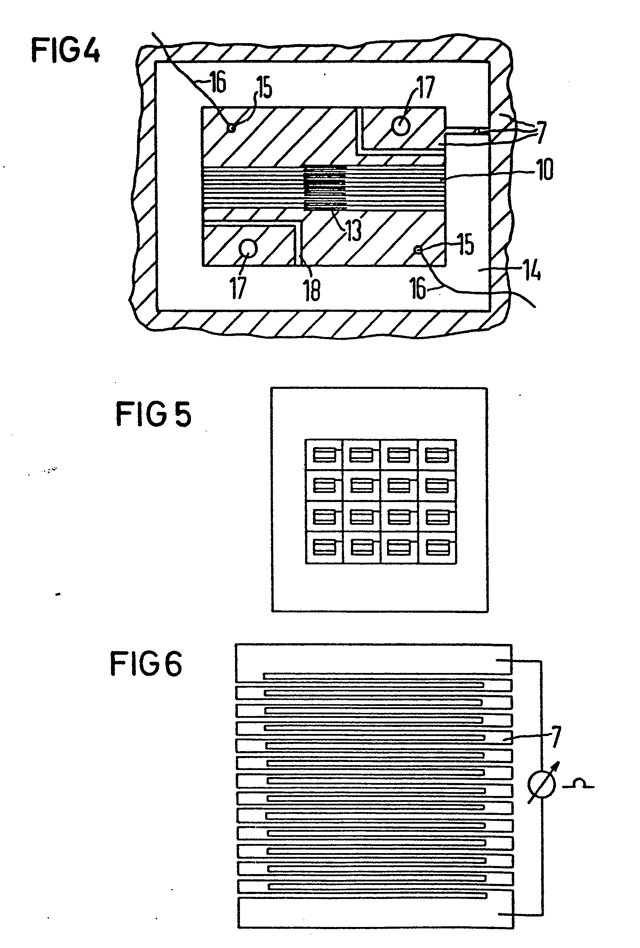

In der Figur 4 ist ein Einzelbaustein nach dem letzten Verfahrensschritt dargestellt. Mit 7 ist wiederum Nickel, mit 10 Nickelstege und Kupfer, mit 13 das freitragende Nickelgitter über dem partiellen Durchbruch und mit 14 die Freiätzung gekennzeichnet. Mit 15 sind Kontaktierungsstellen bezeichnet, an denen das Gitter der Frontseite über Drähte 16 angeschlossen ist. Zusatzlöcher 17 sind nicht dargestellte Kontaktierungsdrähte für den Anschluß des Gitters auf der Rückseite. 18 kennzeichnet eine Unterbrechung der Nickel-Fläche.

Nach dem Ätzen von Kupfer (zwischen den Nickelstegen außerhalb der Meßöffnung) mit Chromsäure schließt sich ein Ätzen von Titan (zwischen den Nickelstegen außerhalb der Meßöffnung) zum Beispiel mit 20 % iger Flußsäure an. Mit erwärmter, verdünnter Schwefelsäure werden die Glasätzreste weggelöst.

Die Figur 5 zeigt die Aufsicht auf einen Nutzen mit 16 Einzelbausteinen im Maßstab 1:1. Für die Verwendung als Mikroströmungsfühler wird an den einzelnen Bausteinen der ohmsche Widerstand der Nickelgitter jeweils an Front- und Rückseite bestimmt.

Im Maßstab 5D:1 ist in der Figur 6 die Aufsicht auf eine Meßöffnung eines Einzelbausteins wiedergegeben.

Variationen der Gittergeometrien sind foto- . und ätztechnisch auch in größerem Rahmen realisierbar. Es besteht ferner die Möglichkeit, auch in Nutzen mit wesentlich mehr Einzelbausteinen zu arbeiten.

**Patentansprüche**

1. Verfahren zur Herstellung freitragender Metallgitterstrukturen, dadurch gekennzeichnet daß auf einem elektrisch isolierenden Träger beidseitig eine Metallgitterstruktur (13) aufgebracht und anschließend in einem definierten Bereich unter dem Gitter ein partieller Durchbruch in dem Träger geätzt wird.

2. Verfahren nach Anspruch 1, dadurch gekennzeichnet, daß vorzugsweise auf einem Glasträger durch Kombination von jeweils doppelseitiger Vakuumbeschichtung (zur Erzeugung einer elektrisch leitenden Schicht), Fototechnik (zur Erzeugung von Negativgitterstrukturen), Galvanik (zum Aufbau von Gitterstegen und flächiger Metallisierung) und Ätzttechnik die Strukturen in gegenseitig definierter Lage erzeugt werden.

3. Verfahren nach Anspruch 2, dadurch gekennzeichnet, daß der Glasträger zunächst mit Titan und Kupfer und anschließend mit Fotolack beschichtet wird, ferner einem Fototechnikprozeß unterworfen wird und zunächst die Negativstrukturen im Fotolack erzeugt werden, anschließend Metallstrukturen (Gitter und flächige Metallisierung) galvanoplastisch aufgebracht werden und der verbleibende Fotolack entfernt wird, daraufhin die gesamten Flächen wiederum mit Fotolack beschichtet und dann einer zweiten Fototechnik unterworfen werden, ferner die nicht mit Fotolack und Metallstruktur beschichteten Flächen aus den Grundmetallisierungsschichten Titan und Kupfer freigeätzt, die gewünschten Durchbrüche im Glas ätztechnisch erzeugt und schließlich der Fotolack völlig entfernt wird und anschließend die nicht mit Metallstruktur belegten Flächen vom Titan und Kupfer freigeätzt und anschließend verbleibende Glasätzreste weggelöst werden.

4. Verfahren nach Anspruch 2, dadurch gekennzeichnet, daß bei der Herstellung mehrerer Einzelbausteine aus einem größeren Substrat die Einzelbausteine gleichzeitig mit dem Ätzen der Durchbrüche bis auf einen schmalen Haltesteg (7) freigeätzt werden.

5. Verwendung der nach den Ansprüchen 1 bis 4 hergestellten Einzelbausteine als Mikroströmungsfühler für Gasanalysengeräte.

6. Verfahren nach den Ansprüchen 1 bis 4, bei der Verwendung der Einzelbausteine als Mikroströmungsfühler, dadurch gekennzeichnet, daß in jedem Einzelbaustein zusätzliche Löcher (17) für die Anschlußkontaktierung auf der Vorder- und Rückseite vorgesehen sind, in die Kontaktierdrähte eingeführt und angelötet werden und die erforderlichen Metallstrukturen (18) bereits in der Maske vorgesehen sind.

## Claims

1. A process for manufacturing self-supporting metal grid structures, characterised in that a metal grid structure (13) is applied to both sides of an electrically insulating carrier and in a defined region below the grid a partial opening is subsequently etched in the carrier.

2. A process as claimed in Claim 1, characterised in that, preferably on a glass carrier, the structures are produced in oppositely defined positions by combining vacuum coating (to produce an electrically conductive layer), photographic (to produce negative grid structures), electrodeposition (to form grid bars and area metallization) and etching techniques.

3. A process as claimed in Claim 2, characterised in that the glass carrier is first coated with titanium and copper and subsequently with a photo-lacquer, and is further subjected to a photographic process and the negative structures are first produced in the photo-lacquer; metal structures (grids and area metallization) are subsequently applied in a galvanoplastic manner and the remaining photo-lacquer is removed; the entire surfaces are subsequently re-coated with photo-lacquer and then subjected to a second photographic process; the surfaces not coated with photo-lacquer and metal structures are further etched free from the basic metallization layers of titanium and copper; the required openings are produced in the glass by an etching technique; the photo-lacquer is subsequently completely removed; and the surfaces which are not coated with a metal structure are then etched free from titanium and copper and residual glass etching residues are subsequently dissolved.

4. A process as claimed in Claim 2, characterised in that during the production of a plurality of individual modules, the individual modules are etched free from a large substrate, except for a narrow holding bridge (7), simultaneously with the etching of the openings.

5. The use of the individual modules produced according to Claims 1 to 4, as micro-flow sensors for gas analysis devices.

6. A process as claimed in Claim 1 to 4, employing the individual modules as micro-flow sensors, characterised in that in each individual module additional apertures (17) are arranged for terminal contacting at the front and rear, into which apertures contacting wires are inserted and soldered, and the required metal structures (18) are already arranged in the mask.

## Revendications

1. Procédé pour la fabrication de structures de grilles métalliques autoportantes, caractérisé en ce qu'une structure de grille métallique (13) est appliquée sur les deux faces d'un support électriquement isolant et une percée partielle est ensuite gravée dans le support dans une zone définie sous la grille.

2. Procédé selon la revendication 1, caractérisé en ce que les structures sont formées, en position relative définie, sur chacune des deux faces d'un support, de préférence en verre, par la combinaison d'un revêtement sous vide (pour la formation d'une couche électriquement conductrice), d'une technique photographique (pour la formation de structures de grilles négatives), de galvanoplastie (pour la constitution de barrettes de grille et une métallisation en surface) et d'une gravure.

3. Procédé selon la revendication 2, caractérisé en ce que le support en verre est revêtu d'abord de titane et de cuivre puis de laque photosensible et est soumis en outre à un processus photographique, que les structures négatives sont formées d'abord dans la laque photosensible, des structures métalliques (grille et métallisation) sont appliquées ensuite par galvanoplastie et la laque photosensible restante est enlevée, qu'après cela, les faces sont revêtues de nouveau entièrement de laque photosensible puis soumises à un deuxième processus photographique, les surfaces non revêtues de laque photosensible et de structures métalliques sont dégagées en outre des couches de métallisation de base en titane et cuivre, les percées désirées sont formées dans le verre par gravure, la laque photosensible est enfin enlevée complètement, les surfaces non recouvertes de structures métalliques sont débarrassées du titane et du cuivre par gravure puis des résidus de la gravure du verre sont éliminés par dissolution.

4. Procédé selon la revendication 2, caractérisé en ce que, lors de la fabrication de plusieurs modules individuels à partir substrat plus grand, les modules sont détachés les uns des autres par gravure; à l'exception d'une barrette d'attache (7) étroite, en même temps que s'effectue la gravure des percées.

5. Utilisation des composants fabriqués selon les revendications 1 à 4 comme microcapteurs d'écoulement pour appareils d'analyse de gaz.

6. Procédé selon les revendications 1 à 4, en cas d'utilisation des moduies individuels comme microcapteurs d'écoulement, caractérisé en ce que chaque module est pourvu de trous (17) supplémentaires pour l'établissement de contacts de connexion sur la face avant et la face arrière, dans lesquels sont introduits et soudés des fils de contact, et que les structures métalliques (18) nécessaires sont déjà prévues dans le masque.

## FIG 1

## FIG 2

## FIG 3

**FIG 4**

**FIG 5**

**FIG 6**